# EUROPÄISCHE PATENTSCHRIFT

(11) **EP 2 771 697 B1**
(45) Veröffentlichungstag und Bekanntmachung des Hinweises auf die Patenterteilung: **07.09.2022**
(21) Anmeldenummer: 12790789.7
(22) Anmeldetag: 29.10.2012
(51) Int. Cl.: G01N 35/00, G01N 35/02

(54) **VORRICHTUNG UND VERFAHREN ZUM NACHWEIS VON IN BIOLOGISCHEN ODER CHEMISCHEN PROBEN VORLIEGENDEN SUBSTANZEN**
DEVICE AND METHOD FOR DETECTING SUBSTANCES PRESENT IN BIOLOGICAL OR CHEMICAL SAMPLES
DISPOSITIF ET PROCÉDÉ DE DÉTECTION DE SUBSTANCES PRÉSENTES DANS DES PRÉLÈVEMENTS BIOLOGIQUES OU CHIMIQUES

(30) Priorität: 28.10.2011 DE 102011117320; 26.10.2012 WO PCT/EP2012/004490
(43) Veröffentlichungstag der Anmeldung: 03.09.2014
(73) Patentinhaber: Aeneas GmbH & Co. KG, 55234 Wendelsheim (DE)
(72) Erfinder: SCHIMON, Hans-Peter, 73092 Heiningen (DE); BLECKEN, Jens, 55546 Fürfeld (DE); WULF, Markus, 55232 Alzey (DE)
(74) Vertreter: Schaafhausen Patentanwälte PartGmbB
(86) Internationale Anmeldenummer: PCT/EP2012/004526
(87) Internationale Veröffentlichungsnummer: WO 2013/060482

(56) Entgegenhaltungen:
- EP-A1- 2 133 668
- US-A1- 2008 207 461
- US-A1- 2011 059 870
- US-A1- 2011 105 354

## Beschreibung

Die vorliegende Erfindung betrifft eine Vorrichtung und ein Verfahren zum Nachweis von in biologischen oder chemischen Proben vorliegenden Substanzen, welche jeweils bei Reaktion mit einem Reagenz ein optisch erfassbares Signal liefern, gemäß dem Oberbegriff des Anspruchs 1 bzw. 4.

Untersuchungen biologischer und chemischer Proben sind immer häufiger nötig.

Dabei müssen oft ganze Testserien bearbeitet werden, die natürlich möglichst effizient durchgeführt werden sollen. Hierzu gehören beispielsweise die sogenannten ELISA-Tests ("ELISA" = "Enzyme-Linked Immuno Sorbent Assay"), die aus der klinischen Diagnostik und der Live-Science-Forschung nicht mehr wegzudenken sind.

Aus der DE 10 2008 022 835 B3 sind ein Verfahren und eine Vorrichtung als Analysegerät zum Untersuchen von biologischen oder chemischen Proben, welche jeweils bei Reaktion mit einem Reagenz einen Farbumschlag und/oder eine Fluoreszenz erfahren, gemäß dem Oberbegriff des Anspruchs 1 bzw. 4 bekannt, womit auch ELISA-Tests ausgeführt werden können. Dabei wird ein Probenträger (wie z.B. eine Mikrotiterplatte) verwendet, der eine Vielzahl - jedenfalls mehr als zwei - von Behältern zur Aufnahme von Proben aufweist. Die Behälter werden auch als Vertiefungen, Kavitäten oder Wells, gelegentlich auch als Töpfchen, bezeichnet. Dem Analysegerät nachgeschaltet ist eine Auswerteeinrichtung beispielsweise in Form von mit einem Computer verbundenen, nicht zum Analysegerät gehörigen Fotometern vorgesehen, womit die Proben untersucht bzw. analysiert oder ausgewertet werden können. Unter Farbumschlag ist übrigens auch jedwede Farbänderung zu verstehen.

US 2008/207461 A1 beschreibt ein Analysegerät bei welchem die Spektren einer Reaktion mit einer Kamera erfasst werden und danach ausgewertet. EP 2 133 668 A1 beschreibt ein Analysegerät bei welchem die Probenmenge mittels einer Kamera bestimmt wird.

Es treten immer wieder Fälle auf, in denen sehr wenig Menge an Probenflüssigkeit zur Verfügung steht. In diesen Fällen kann es schwierig werden, alle erforderlichen Messungen auszuführen.

Da außerdem für die Fotometer je nach Art der zu untersuchenden Proben bzw. der zu erwartenden Reaktionen, Farbumschläge und/oder Fluoreszenzen unterschiedliche (Farb-)Filter etc. eingesetzt werden müssen, verzögert sich die Auswertung durch die separaten Messungen mit den verschiedenen Filtern, und der Automatisierungsgrad wird beispielsweise wegen vorzunehmender Filterwechsel beeinträchtigt.

Der vorliegenden Erfindung liegt daher die Aufgabe zugrunde, die genannten Nachteile des Standes der Technik zu beseitigen und eine möglichst ressourcenschonende, d.h. eine möglichst wenig Probenflüssigkeit erfordernde, Auswertung zu ermöglichen, wobei zusätzlich eine vollständige Automatisierung sowie größtmögliche Beschleunigung der auftretenden Prozesse erzielt werden soll.

Diese Aufgabe wird mit einer Vorrichtung gemäß Anspruch 1 bzw. einem Verfahren gemäß Anspruch 4, einem Computerprogrammprodukt bzw. Computerprogramm gemäß Anspruch 10 sowie einem Datenträger gemäß Anspruch 11 mit einem darauf gespeicherten Computerprogrammprodukt gelöst. Vorteilhafte Weiterbildungen der Erfindung sind Gegenstand der abhängigen Ansprüche.

Eine erfindungsgemäße Vorrichtung zum Nachweis von in biologischen oder chemischen Proben vorliegenden Substanzen, welche jeweils bei Reaktion mit einem Reagenz ein optisch erfassbares Signal liefern, weist einen Probenträger wie beispielsweise eine Mikrotiterplatte auf, in dem mindestens ein Behälter, wie z.B. Näpfchen, Well, Kavität, Vertiefung, Töpfchen etc., vorgesehen ist, um darin Proben aufnehmen zu können. Die genaue Form dieser Behälter kann großen Variationen unterliegen und spielt für die vorliegende Erfindung keine entscheidende Rolle. In der Praxis ist meist nicht nur einer, sondern eine Vielzahl von derartigen Behältern vorgesehen, die typischerweise standardisierte "Footprints" bzw. Anordnungsmuster aufweisen, was jedoch ebenfalls nicht erfindungswesentlich ist. Ferner muss die Anordnung so getroffen sein, dass in jedem (zumindest in dem einen genannten) Behälter jeweils mindestens zwei - natürlich verschiedene - Reagenzien vorhanden sein oder dort hin zugegeben werden können. Außerdem weist die erfindungsgemäße Vorrichtung für die Auswertung (anstatt von nachgeschalteten Fotometern wie bei der DE 10 2008 022 835 B3) eine Kamera auf, die beispielsweise eine CCD-Kamera sein kann und vorzugsweise eine elektronische Matrix-Kamera wie z.B. eine CMOS-Kamera ist, und die hinsichtlich Brennweite und Schärfe bzw. Entfernungseinstellung so aufgebaut bzw. eingestellt ist, dass sie einen mit mindestens zwei Reagenzien beaufschlagten Behälter in nur einem (einzigen) Bild abbilden kann. Es ist hier zu betonen, dass die vorliegende Erfindung nicht darauf beschränkt ist, dass die Kamera nur ein einzelnes Bild aufnimmt, sondern dass sie selbstverständlich auch mehrere Bilder zur nachfolgenden Auswertung aufnehmen kann. Ferner umfasst die erfindungsgemäße Vorrichtung eine Auswerteeinrichtung zum Auswerten der Proben anhand des aufgenommenen Bildes, womit die in dem Bild enthaltenen Farbspektren analysiert werden können. So können beispielsweise in einem Behälter unterschiedliche Reagenzien wie Antigene/Antikörper zugegeben sein und verschiedenste Signale wie z.B. Fluoreszenzen oder Farbumschläge liefern, die mit der Kamera in einem einzigen Bild oder wahlweise in mehreren Bildern aufzunehmen und danach mittels geeigneter Software auszuwerten sind. Auf diese Weise können aus einer minimalen Menge an Probe - wozu beispielsweise Blut, Serum und Zellflüssigkeit zählen - mindestens zwei messbare nebeneinander ablaufende Reaktionen erfasst erhalten werden. Dadurch kann die Ausbeute pro Serummenge erhöht bzw. die benötigte Serummenge deutlich reduziert werden, um eine Vielzahl von unterschiedlichen Mess- bzw. Diagnosewerten zu erhalten.

Der weitere große Vorteil bei dieser erfindungsgemäßen Lösung besteht darin, dass nur ein einziger Schritt des Aufnehmens eines Bildes bzw. nur eines einzigen Bildes zur Erfassung der jeweiligen Spektren bzw. Signale von mehreren Reagenzien erforderlich ist, und dass außerdem nur ein Schritt des Auswertens des betreffenden Bildes - mit mehreren Spektren - durchgeführt werden muss. Durch die gleichzeitige Aufnahme und nachfolgend - ggf. unter Zwischenspeicherung des Bildes - (zumindest fast) gleichzeitige bzw. gemeinsame Auswertung mehrerer Spektren bzw. Signale, besonders optisch detektierbarer Signale, kann ein hoher Durchsatz an Proben und damit eine hohe Bearbeitungsgeschwindigkeit erzielt werden. Da keine Filterwechsel oder ähnliches erforderlich sind, wird ferner ein hoher Automatisierungsgrad erzielt. Darüber hinaus können durch den Einsatz der Kamera völlig unterschiedliche Reaktionstests, wie beispielsweise Aufnahme bzw. Analyse von Fluoreszenzen sowie unterschiedlichste Farbreaktionen, bei den verschiedenen Reagenzien in einem Behälter eines Probenträgers durchgeführt und ausgewertet werden. Mit der entsprechenden Software lassen sich diese Reaktionstests dann in einem einzigen Schritt (und in einer einzigen Vorrichtung) durchführen.

In der Regel sind bekanntlich viele, zumindest jedoch mehr als zwei, Behälter im Probenträger vorgesehen. Vorzugsweise können sich dann nicht nur in einem einzigen Behälter - sondern auch in mehreren oder sogar allen Behältern - mehrere verschiedene Reagenzien befinden und gemeinsam ausgewertet werden.

Es ist weiter bevorzugt, dass die Kamera nicht nur einen Teil der Proben des Probenträgers, sondern alle Proben in einem einzigen Bild aufnehmen kann. Hierdurch werden eine noch größere Effizienz und Bearbeitungsgeschwindigkeit sowie ein noch besserer Automatisierungsgrad ermöglicht.

Ein erfindungsgemäßes Verfahren zum Nachweis von in biologischen oder chemischen Proben vorliegenden Substanzen, welche jeweils bei Reaktion mit einem Reagenz - das vorzugsweise als Flüssigkeit vorliegt - ein optisch erfassbares Signal liefern, umfasst folgende Schritte: Zunächst werden mindestens zwei (verschiedene) Reagenzien in einen einzigen Behälter eines Probenträgers eingebracht und ggf. immobilisiert, wonach Probe in den Behälter zugegeben wird. Dann wird ein Bild durch eine Kamera (bevorzugt ist eine CMOS-Kamera) derart aufgenommen, dass auf dem Bild die mit den mindestens zwei Reagenzien beaufschlagte Probe bzw. deren Behälter abgebildet ist. Anschließend wird das Bild durch Analysieren der sich nach Zugabe der zu untersuchenden Probe ergebenden Signale wie z.B. der Farbspektren in dem Bild ausgewertet, was üblicherweise durch eine entsprechende Software mittels eines Computers geschieht. Dieses Verfahren bietet die gleichen Vorteile, wie sie bereits in Zusammenhang mit der erfindungsgemäßen Vorrichtung beschrieben wurden. Dies gilt jeweils auch für bevorzugte Ausführungsformen der Verfahren. Dabei wird in der Regel das Signal zu einer Reagenz und damit das Vorliegen einer Substanz in der Probe zugeordnet.

Vorzugsweise wird nicht nur zu einer Probe bzw. Behälter, sondern es werden zumindest zu einem Teil der Behälter jeweils mindestens zwei Reagenzien zugegeben, wonach die Behälter in dem Bild abgebildet und dann in einem gemeinsamen, d.h. in vielen Fällen einzigen, Verfahrensschritt ausgewertet werden.

Sofern von "Zugeben von Reagenzien zu einer Probe in einem Behälter" die Rede ist, soll darunter auch das Zugeben einer Probe zu einem in einem Behälter befindlichen Reagenz verstanden werden, da es in erster Linie auf die Tatsache des Zusammenbringens von Probe und Reagenz ankommt und nicht die Reihenfolge.

Des Weiteren ist es von Vorteil, wenn alle Proben in dem Probenträger in einem einzigen Bild abgebildet und in einem gemeinsamen Verfahrensschritt ausgewertet werden.

Üblicherweise und mit Vorteil erfolgt das Auswerten durch Vergleichen des jeweiligen Spektrums mit einem vorgegebenen Wert bzw. Referenzspektrum, vorzugsweise durch Vergleichen mit mehreren vorgegebenen Werten bzw. Referenzspektren. Das Referenzspektrum bzw. die Referenzspektren werden aus einer bzw. mehreren Referenz- oder Nullproben erhalten, die in einem bzw. mehreren Behältern aufgenommen sind.

In einer weiteren Ausgestaltung der Erfindung wird die Intensität des bzw. der erfassten Signale mit der Intensität von Signalen verglichen, die mittels bekannter Mengen der zu bestimmenden Substanz erzeugt wurde. Durch Zuordnen der Signalintensität ist auch eine quantitative Bestimmung der Menge der in der Probe vorliegenden Substanz möglich.

In einer zweckmäßigen Ausführung der Erfindung wird das Vorliegen von Substanzen in der jeweiligen Probe mittels klassischen immunologischen Verfahren wie z.B. Elisa durchgeführt. Dabei eignet sich die erfindungsgemäße Vorgehensweise auch zur gleichzeitigen Bestimmung und zum Nachweis verschiedener Klassen von Antikörpern bzw. Immunglobulin wie IgA, IgM, IgG etc. Hierzu wird nach dem Binden der jeweiligen Immunglobuline an ein immobilisiertes Antigen der Behälter mit mindestens einem markierten Antikörper versetzt, der spezifisch mit einer der Immunglobin-Unterklassen bindet. Wird eine Mischung von unterschiedlich markierten Antikörpern verwendet, die jeweils für eine andere Subklasse spezifisch sind, so kann mittels einer einzigen Aufnahme das Auftreten dieser Immunglobuline nebeneinander nachgewiesen werden und so eine Subklassendifferenzierung von Immunglobulin erfolgen.

In einer weiteren bevorzugten zweckmäßigen Ausführungsform der Erfindung werden zu bestimmende Zelltypen durch entsprechende Marker, insbesondere Farb- und Fluoreszenzmarker, charakterisiert. Hierzu wird die zu untersuchende Probe, insbesondere Serum oder Plasma, mit verschiedenen, mit solchen Markern versehenen Antikörpern in Kontakt gebracht, welche an spezifizierte Zelltypen, insbesondere Lymphozyten, binden. Durch die Analyse mittels der Kamera kann nun festgestellt werden, welche der entsprechenden Zellen vorliegen. Ebenfalls kann durch das Auswerten der Farb- bzw. Fluoreszenzintensitäten eine semiquantitative Analyse erfolgen, wie es beispielsweise auch in ähnlicher Weise bei FACS (fluorescence activated cell sorting)-Analysen realisiert wird. Die erfindungsgemäße Vorgehensweise ist dabei jedoch nicht auf spezifizierte Zelltypen beschränkt, sondern kann natürlich auch auf Zellfragmente, Zellorganellen und/oder andere Zellbestandteile angewendet werden.

Selbstverständlich sind verschiedenste Konfigurationen der Anordnung der Reagenzien in einem Behälter möglich. So bietet es sich beispielsweise an, die unterschiedlichen Reagenzien in Form einer quadratischen oder rechteckigen Matrix (oder einem Großteil davon) in dem Behälter anzuordnen, sofern die Anzahl der zu platzierenden Reagenzien dies ermöglicht. Alternativ kann die Anordnung der Reagenzien so vorgenommen werden, dass bei gegebener Anzahl an Reagenzien der Abstand der einzelnen Reagenzien voneinander maximiert wird. Es ist auch möglich, verschiedene Reagenzien auf einem geordneten Muster wie z.B. konzentrischen Kreisen oder aber willkürlich auf dem Boden des Behälters aufzubringen, wo sie fixiert bleiben, und anschließend eine Probe wie z.B. Blut bzw. Serum in den Behälter einzubringen.

Die erfindungsgemäße Vorrichtung und/oder das erfindungsgemäße Verfahren können/kann eingesetzt werden, um vor einer Bildaufnahme eines oder mehrerer Behälter, in der/denen eine oder mehrere Proben angeordnet ist/sind, das Volumen der Probe oder der Proben zu kontrollieren. Die Bildaufnahme kann erfindungsgemäß dadurch erfolgen, dass die Kamera vor der Aufnahme des Bildes von dem oder den Behältern weg, beispielsweise um im Wesentlichen 90 Grad, in Richtung einer Grenzlinie zwischen der in dem Behälter oder in den Behältern anzuordnenden Probe und einem ersten Fluid, die in einer Pipette angeordnet sind, gedreht oder geschwenkt wird. Alternativ kann die Bildaufnahme erfindungsgemäß dadurch erfolgen, dass die Kamera vor der Aufnahme des Bildes von dem oder den Behältern weg, beispielsweise um im Wesentlichen 90 Grad, in Richtung eines ersten Abschnitts einer ersten Pipette und eines zweiten Abschnittes einer zweiten Pipette, die zusammen auf einem mit der Kamera aufgenommenen Bild abgebildet sind, gedreht oder geschwenkt wird.

Vor der Aufnahme des Bildes von dem oder den Behältern kann die Kamera also zur Aufnahme eines weiteren Bildes derart gedreht oder geschwenkt werden, dass auf dem weiteren Bild eine Grenzlinie zwischen der Probe und einem ersten Fluid, die in einer Pipette angeordnet sind, oder der erste Abschnitt der ersten Pipette und der zweite Abschnitt der zweiten Pipette zusammen abbildbar ist/sind.

In einer Ausführungsform ist die Kamera zur Aufnahme des Bildes von der Pipette oder den Pipetten vertikal auf die Pipette(n) und nach dieser Bildaufnahme horizontal auf einen oder mehrere unterhalb der Kamera angeordnete Behälter gerichtet. Entsprechende Vorrichtungen und Verfahren zur Bildaufnahme und Auswertung eines aufgenommenen Bildes von einer Grenzlinie zwischen einer Probe und einem ersten Fluid, die in einer Pipette angeordnet sind, oder eines ersten Abschnitts einer ersten Pipette und eines zweiten Abschnittes einer zweiten Pipette, die zusammen auf einem mit der Kamera aufgenommenen Bild abgebildet sind, bei denen die erfindungsgemäße Vorrichtung und/oder das erfindungsgemäße Verfahren eingesetzt werden können, sind in den parallelen deutschen Patentanmeldungen der Anmelderin der vorliegenden Anmeldung mit dem Aktenzeichen DE 10 2011 117 310.6 mit dem internen Aktenzeichen AES 80204 und DE 10 2011 117 323.8 dem internen Aktenzeichen AES 80207 beschrieben.

Weitere Vorteile, Merkmale und Besonderheiten der Erfindung ergeben sich aus der nachfolgenden Beschreibung von bevorzugten, jedoch nicht beschränkenden Ausführungsformen der Erfindung anhand der schematischen und nicht maßstabsgetreuen Zeichnungen. Es zeigen:
- Fig. 1: in stark schematisierter Darstellung eine Seitenansicht einer Ausführungsform einer erfindungsgemäßen Vorrichtung, und
- Fig. 2: eine Draufsicht auf einen Probenträger der erfindungsgemäßen Vorrichtung.

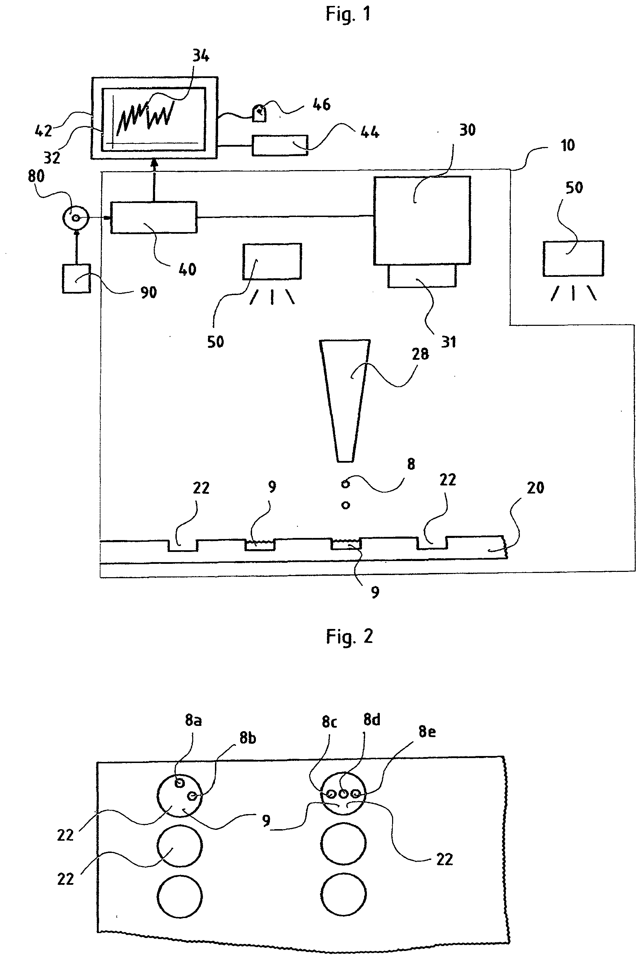

Fig. 1 zeigt eine erfindungsgemäße Vorrichtung 10 zum Untersuchen von biologischen oder chemischen Proben, welche jeweils bei Reaktion mit einem Reagenz einen Farbumschlag und/oder eine Fluoreszenz erfahren bzw. zeigen oder verursachen. In einem Probenträger 20 sind mehrere Behälter 22 vorgesehen, in denen Proben 9 bzw. Reagenzien wie Antikörper und/oder Antigene eingebracht sind oder in die Proben 9 bzw. Reagenzien eingebracht werden können. Um die Proben 9 beispielsweise auf das Vorhandensein bestimmter Antigene oder Antikörper zu testen, werden mittels Pipetten 28 entsprechende Reagenzien 8, die hier schematisch als fallende Tröpfchen dargestellt sind, in die Behälter 22 zu den Proben 9 gegeben, worauf die Proben 9 mit korrespondierenden optischen Signalen wie Farbreaktionen, Fluoreszenzen etc. reagieren können. Für eine gute Ausleuchtung sind Lampen 50 vorgesehen, von denen bei dieser Ausführungsform zwei exemplarisch dargestellt sind.

Um eine effiziente, schnelle und automatisierte Auswertung der Reaktionen der Proben 9 mit den Reagenzien 8 vornehmen zu können, ist erfindungsgemäß eine Kamera 30 vorgesehen, wofür sich insbesondere eine CMOS-Kamera eignet, die so angeordnet ist, dass sie den gesamten Probenträger 20 mit allen Behältern 22 aufnimmt, also ein Bild 32 davon anfertigt. Selbstverständlich kann alternativ nur ein Teil der Behälter 22 aufgenommen und ausgewertet werden, wenn dies gewünscht ist. Dies bedeutet insbesondere, dass das Objektiv 31 der Kamera 30 eine geeignete Brennweite aufweist und eine korrekte Entfernungseinstellung ermöglicht.

Das von der Kamera 30 aufgenommene Bild 32 wird einem als Auswerteeinrichtung dienenden Computer 40 zugeführt, der die in dem Bild 32 enthaltenen Signale 34 auf einem Monitor 42 darstellt. Der Computer kann in üblicher Weise über eine Tastatur 44 und/oder eine Maus 46 gesteuert werden. Mittels einer geeigneten, auf dem Computer 40 lauffähigen, Software bzw. einem Computerprogramm 90, welches z.B. auf einer CD 80 als Datenträger gespeichert sein kann, werden dann die Farbspektren ausgewertet, indem sie mit entsprechenden Referenzspektren und/oder Referenzwerten verglichen werden. Erfindungsgemäß kann dabei die Auswertung aller Spektren gleichzeitig (oder zumindest fast gleichzeitig) vorgenommen werden. Jeder Probe 9 bzw. jedem Behälter 22 wird dabei automatisch - z.B. unter Verwendung von Strichcodes - das entsprechende Spektrum 34 zugeordnet und beispielsweise angegeben, welcher Antikörper bzw. welches Antigen nachgewiesen wurde. Die ressourcensparende Besonderheit der vorliegenden Erfindung besteht darin, in die Probe(n) 9 in einem Behälter 22 - oder in mehreren oder sogar allen Behältern 22 - zwei oder mehr Reagenzien 8 einzubringen und die resultierenden Reaktionen gleichzeitig nebeneinander zu erfassen und ggf. elektronisch zu speichern. Die Auswertung dieser Signale mittels einer Datenbank kann ebenfalls gleichzeitig oder auch zu einem beliebigen Zeitpunkt später erfolgen.

In beispielhafter Weise ist in Fig. 2 in Draufsicht ein Ausschnitt eines Probenträgers 20 mit mehreren Behältern 22 dargestellt, die jeweils mit der gleichen Probe 9 beaufschlagt worden sind. In der in Fig. 2 links oben dargestellte Behälter sind zuvor ein erstes Reagenz 8a und ein zweites Reagenz 8b auf dem Boden des Behälters 22 aufgebracht worden, wo sie immobilisiert bleiben, während sich im rechts daneben dargestellten Behälter 22 ein drittes Reagenz 8c, ein viertes Reagenz 8d sowie ein fünftes Reagenz 8e befinden. Die drei Reagenzien 8c-8e sind in beispielhafter Weise gemäß Darstellung in Fig. 2 in einer Reihe angeordnet.

Alternativ kann auch zuerst die Probe 9 (oder mehrere verschiedene Proben) in Behälter 22 eingebracht und anschließend Reagenzien zugegeben werden.

In analoger Weise kann jedes einzelne oder eine gewünschte Anzahl der Behälter 22 mehrfach - also mit verschiedenen - Reagenzien 8 belegt werden. Nach dem Erstellen eines Bilds 32 dieser Behälter 22 mit den Proben 9 und den Reagenzien 8a-8e kann dann die Auswertung anhand der aufgetretenen Farbspektren gemeinsam in schon beschriebener Weise erfolgen.

Damit können schon kleinste Mengen an Probenflüssigkeit auf viele verschiedene Reaktionen untersucht werden. Dadurch können aus einer minimalen Menge an Probenflüssigkeit - wie beispielsweise Blut, Serum und Zellflüssigkeit - bereits unterschiedliche messbare Reaktionen erhalten werden, wodurch die Ausbeute pro Probenmenge erhöht und somit die benötigte Probenmenge deutlich reduziert werden kann, um eine Vielzahl von unterschiedlichen Mess- bzw. Diagnosewerten zu erhalten. Es ist klar, dass diese Methode ihre Grenzen in der optischen Auflösung der Kamera 30 bzw. deren Objektiv 31 und/oder der angeschlossenen Bildverarbeitung sowie der Diffusion und evtl. sogar Vermischung der Reagenzien 8 in den einzelnen Behältern 22 findet.

Hinsichtlich der Auswertung ist zu erwähnen, dass zur Quantifizierung an einigen auch als Dots bezeichneten Stellen - vorzugsweise an einer Reihe bzw. Spalte oder einer Zeile - Referenzen angeordnet werden, um mittels einer Verdünnungsreihe einen Standard zu bilden.

Es ist festzuhalten, dass die unter Bezug auf die dargestellten Ausführungsformen der Vorrichtung und des Verfahrens beschriebenen Merkmale der Erfindung, wie beispielsweise Ausführung und Gestalt der Behälter, der Kamera etc., Anordnung der verschiedenen Reagenzien in einem einzigen Behälter, auch bei anderen Ausführungsformen vorhanden sein können, außer wenn es anders angegeben ist oder sich aus technischen Gründen von selbst verbietet. Außerdem ist klar, dass Vorteile und Merkmale, die im Hinblick auf das erfindungsgemäße Verfahren beschrieben wurden, auch für entsprechende Ausführungsformen der erfindungsgemäßen Vorrichtung gelten und umgekehrt.

### Bezuqszeichenliste

- 8: Reagenz
- 8a: erstes Reagenz
- 8b: zweites Reagenz
- 8c: drittes Reagenz
- 8d: viertes Reagenz
- 8e: fünftes Reagenz
- 9: Probe
- 10: Vorrichtung
- 20: Probenträger
- 22: Behälter
- 28: Pipette
- 30: Kamera
- 31: Objektiv
- 32: Bild
- 34: Signal/Farbspektrum
- 40: Auswerteeinrichtung/Computer
- 42: Monitor
- 44: Tastatur
- 46: Maus
- 50: Lampe
- 80: Datenträger/CD
- 90: Computerprogramm

## Patentansprüche

1. Vorrichtung (10) zum Nachweis von in biologischen oder chemischen Proben (9) vorliegenden Substanzen, welche bei nebeneinander ablaufenden Reaktionen mit mindestens einem Reagenz (8) ein für die jeweilige Substanz optisch erfassbares und unterscheidbares Spektrum bzw. Signal (34) erzeugen, aufweisend:
- einen mindestens einen Behälter (22) enthaltenden Probenträger (20) zur Aufnahme von Proben (9),
**dadurch gekennzeichnet, dass**
- zumindest ein Teil der Behälter (22) zur Aufnahme von jeweils mindestens zwei Reagenzien (8) ausgestaltet ist,
- eine Kamera (30), die zur Kontrolle des Volumens der Proben (9) in einem ersten Schritt und die zur Erfassung in einem Schritt der durch die Reaktionen mit der jeweiligen Substanz erhaltenen Spektren bzw. Signale in mindestens einem mit Mindestens zwei Reagenzien belegten Behälter (22) in einem zweiten Schritt ausgestaltet ist, und
- eine Auswerteeinrichtung (4), welche die Proben (9) durch Analysieren der Spektren bzw. Signale (34) mindestens eines mit mindestens zwei Reagenzien beleggten Behälters (22) auswertet,
wobei die Kamera (30) zur Kontrolle des Volumens der Proben (9) von dem oder den Behältern weg, um im Wesentlichen 90 Grad in Richtung einer Grenzlinie zwischen der in dem Behälter oder in den Behältern anzuordnenden Probe und einem ersten Fluid, die in einer Pipette angeordnet sind, oder in Richtung eines ersten Abschnitts einer ersten Pipette und eines zweiten Abschnittes einer zweiten Pipette, die zusammen auf einem mit der Kamera (30) aufgenommenen Bild abgebildet sind, gedreht oder geschwenkt wird.

2. Vorrichtung nach Anspruch 1, **dadurch gekennzeichnet, dass**
- der Probenträger (20) mindestens zwei Behälter (22) zur Aufnahme von Proben (9) enthält, und
- die Kamera (30) zur Erfassung in einem Schritt der durch die Reaktionen erzeugten Spektren bzw. Signale mindestens eines mit mindestens zwei Reagenzien belegten Behälters (22) ausgestaltet ist.

3. Vorrichtung nach Anspruch 1 oder 2, **dadurch gekennzeichnet, dass** die Kamera (30) zur Erfassung der durch die Reaktionen erzeugten Spektren bzw. Signale aller Proben (9) in dem Probenträger (20) ausgestaltet ist.

4. Verfahren zum Nachweis von in biologischen oder chemischen Proben (9) vorliegenden Substanzen, welche bei nebeneinander ablaufenden Reaktionen mit mindestens einem Reagenz (8) ein für die jeweilige Substanz optisch erfassbares und unterscheidbares Signal erzeugen, umfassend folgende Schritte:
- Einbringen von mindestens zwei Reagenzien (8) in einen einzigen Behälter (22) eines Probenträgers (2), und ggf. Immobilisieren der Reagenzien (8),
- Kontrolle des Volumens der Probe (9) mittels einer Kamera (30)
- Zugeben von Probe (9) in den Behälter (22),
- Erfassen in einem Schritt der durch die Reaktionen mit der jeweiligen Substanz erhaltenen Spektren bzw. Signale in mindestens einem mit mindestens zwei Reagenzien belegten Behälter (22) durch die Kamera (30), und
- Auswerten der Spektren bzw. Signale (34) von mindestens eines mit mindestens zwei Reagenzien belegten Behälters (22),
wobei die Kamera (30) zur Kontrolle des Volumens der Proben (9) von dem oder den Behältern weg, um im Wesentlichen 90 Grad in Richtung einer Grenzlinie zwischen der in dem Behälter oder in den Behältern anzuordnenden Probe und einem ersten Fluid, die in einer Pipette angeordnet sind, oder in Richtung eines ersten Abschnitts einer ersten Pipette und eines zweiten Abschnittes einer zweiten Pipette, die zusammen auf einem mit der Kamera (30) aufgenommenen Bild abgebildet sind, gedreht oder geschwenkt wird.

5. Verfahren nach Anspruch 4, **dadurch gekennzeichnet, dass** jeweils mindestens zwei Reagenzien (8) zu mindestens zwei Behältern (22) hinzugegeben werden, und die Spektren bzw. Signalen (34) der mindestens zwei Behälter in einem gemeinsamen Verfahrensschritt erfasst bzw. ausgewertet werden.

6. Verfahren nach Anspruch 4 oder 5, **dadurch gekennzeichnet, dass** alle Proben (9) in dem Probenträger (20) und deren durch die Reaktionen erzeugten Spektren bzw. Signale in einem gemeinsamen Verfahrensschritt erfasst bzw. ausgewertet werden.

7. Verfahren nach einem der Ansprüche 4 bis 6, **dadurch gekennzeichnet, dass** das Auswerten durch Vergleichen des jeweiligen Spektrums (34) mit einem vorgegebenen Wert bzw. Referenzspektrum vorzugsweise mit mehreren vorgegebenen Werten bzw. Referenzspektren erfolgt.

8. Verfahren nach einem der Ansprüche 4 bis 7, **dadurch gekennzeichnet, dass** als Reagenzien (8a-e) verschiedene Subklassen eines Antikörpers in mindestens einen der Behälter (22) eingebracht werden.

9. Verfahren nach Anspruch 8, **dadurch gekennzeichnet, dass** die Antikörper mit spezifischen Farb- oder Fluoreszenzmarkern versehen sind und durch ein Auswerten der Farb- oder Fluoreszenzintensitäten eine semiquantitative Analyse erfolgt.

## Claims

1. A device (10) for detecting substances present in biological or chemical samples (9), which, given reactions taking place in parallel with at least one reagent (8), generate a spectrum or signal (34) that is optically detectable and distinguishable for the respective substance, having:
- a sample carrier (20), containing at least one container (22), for receiving samples (9), **characterized in that**
- at least a part of the container (22) is designed for receiving at least two respective reagents (8),
- a camera (30) which is designed to monitor the volume of the samples (9) in a first step, and which is designed to detect, in one step, the spectra or signals obtained by the reactions with the respective substance, in at least one container (22) occupied by at least two reagents, said detection occurring in a second step, and
- an evaluation device (4) which evaluates the samples (9) by analyzing the spectra or signals (34) of at least one container (22) occupied by at least two reagents,
wherein, to monitor the volume of the samples (9), the camera (30) is rotated or pivoted away from the container or containers by substantially 90 degrees in the direction of a boundary line between the sample to be arranged in the container or containers and a first fluid, said first fluid being arranged in a pipette, or in the direction of a first segment of a first pipette and a second segment of a second pipette, which are imaged together in an image recorded by the camera (30).

2. The device according to claim 1, **characterized in that**
- the sample carrier (20) contains at least two containers (22) for receiving samples (9), and
- the camera (30) is designed to detect, in one step, the spectra or signals, generated by the reactions, of at least one container (22) occupied by at least two reagents.

3. The device according to claim 1 or 2, **characterized in that** the camera (30) is designed to detect the spectra or signals, generated by the reactions, of all samples (9) in the sample carrier (20).

4. A method for detecting substances present in biological or chemical samples (9), which, given reactions taking place in parallel with at least one reagent (8), generate a signal that is optically detectable and distinguishable for the respective substance, comprising the following steps:
- introducing at least two reagents (8) into a single container (22) of a sample carrier (2), and immobilizing the reagents (8) if necessary,
- monitoring the volume of the sample (9) by means of a camera (30)
- adding sample (9) into the container (22),
- recording by the camera (30), in one step, the spectra or signals obtained by the reactions with the respective substance in at least one container (22) occupied by at least two reagents, and
- evaluating the spectra or signals (34) from at least one container (22) occupied by at least two reagents,
wherein, to monitor the volume of the samples (9), the camera (30) is rotated or pivoted away from the container or containers by substantially 90 degrees in the direction of a boundary line between the sample to be arranged in the container or containers and a first fluid, said first fluid being arranged in a pipette, or in the direction of a first segment of a first pipette and a second segment of a second pipette, which are imaged together in an image recorded by the camera (30).

5. The method according to claim 4, **characterized in that** at least two reagents (8) are respectively added to at least two containers (22), and the spectra or signals (34) of the at least two containers are detected or evaluated in a common method step.

6. The method according to claim 4 or 5, **characterized in that** all samples (9) in the sample carrier (20), and their spectra or signals generated by the reactions, are detected or evaluated in a common method step.

7. The method according to any one of claims 4 to 6, **characterized in that** the evaluation takes place by comparing the respective spectrum (34) with a predetermined value or reference spectrum, preferably with a plurality of predetermined values or reference spectra.

8. The method according to any one of claims 4 to 7, **characterized in that** different subclasses of an antibody are introduced into at least one of the containers (22) as reagents (8a-e).

9. The method according to claim 8, **characterized in that** the antibodies are provided with specific dye or fluorescence markers, and a semi-quantitative analysis takes place by evaluating the dye or fluorescence intensities.

## Revendications

1. Dispositif (10) pour la détection de substances présentes dans des échantillons biologiques ou chimiques (9), lesquelles génèrent, lors de réactions avec au moins un réactif (8) se déroulant parallèlement, un spectre ou signal (34) optiquement détectable et distinguable pour la substance respective, présentant :
- un porte-échantillons (20) contenant au moins un récipient (22) pour la réception d'échantillons (9),
**caractérisé en ce que**
- au moins une partie des récipients (22) est conçue pour la réception d'au moins deux réactifs (8),
- une caméra (30) qui est conçue pour le contrôle du volume des échantillons (9) dans une première étape et pour la détection en une étape des spectres ou signaux obtenus par les réactions avec la substance respective dans au moins un récipient (22) pourvu d'au moins deux réactifs dans une deuxième étape, et
- un dispositif d'évaluation (4), lequel évalue les échantillons (9) par l'analyse des spectres ou signaux (34) d'au moins un récipient (22) pourvu d'au moins deux réactifs,
la caméra (30) étant tournée ou pivotée, pour le contrôle du volume des échantillons (9), dans le sens opposé au(x) récipient(s) essentiellement de 90 degrés dans la direction d'une limite entre l'échantillon à disposer dans le récipient ou dans les récipients et un premier fluide, qui sont disposés dans une pipette, ou dans la direction d'une première section d'une première pipette et d'une deuxième section d'une deuxième pipette, qui sont reproduites ensemble sur une image prise avec la caméra (30).

2. Dispositif selon la revendication 1, **caractérisé en ce que**
- le porte-échantillon (20) contient au moins deux récipients (22) pour la réception d'échantillons (9), et
- la caméra (30) est conçue pour la détection en une étape des spectres ou signaux générés par les réactions d'au moins un récipient (22) pourvu d'au mois deux réactifs.

3. Dispositif selon la revendication 1 ou 2, **caractérisé en ce que** la caméra (30) est conçue pour la détection des spectres ou signaux générés par les réactions de tous les échantillons (9) dans le porte-échantillons (20).

4. Procédé pour la détection de substances présentes dans des échantillons biologiques ou chimiques (9), lesquelles génèrent, lors de réactions avec au moins un réactif (8) se déroulant parallèlement, un signal optiquement détectable et distinguable pour la substance respective, comprenant les étapes suivantes :
- introduction d'au moins deux réactifs (8) dans un seul récipient (22) d'un porte-échantillons (2) et, le cas échéant, immobilisation des réactifs (8),
- contrôle du volume de l'échantillon (9) au moyen d'une caméra (30)
- ajout de l'échantillon (9) dans le récipient (22),
- détection en une étape des spectres ou signaux obtenus par les réactions avec la substance respective dans au moins un des récipients (22) pourvu d'au moins deux réactifs par la caméra (30), et
- évaluation des spectres ou signaux (34) d'au moins un récipient (22) pourvu d'au moins deux réactifs,
la caméra (30) étant tournée ou pivotée, pour le contrôle du volume des échantillons (9), dans le sens opposé au(x) récipient(s) essentiellement de 90 degrés dans la direction d'une limite entre l'échantillon à disposer dans le récipient ou dans les récipients et un premier fluide, qui sont disposés dans une pipette, ou dans la direction d'une première section d'une première pipette et d'une deuxième section d'une deuxième pipette, qui sont reproduites ensemble sur une image prise avec la caméra (30).

5. Procédé selon la revendication 4, **caractérisé en ce qu'**au moins deux réactifs (8) sont ajoutés respectivement à au moins deux récipients (22) et les spectres ou signaux (34) des au moins deux récipients sont détectés ou évalués dans une étape commune.

6. Procédé selon la revendication 4 ou 5, **caractérisé en ce que** tous les échantillons (9) dans le porte-échantillons (20) et leurs spectres ou signaux générés par les réactions sont détectés ou évalués dans une étape commune.

7. Procédé selon l'une quelconque des revendications 4 à 6, **caractérisé en ce que** l'évaluation est effectuée par la comparaison du spectre (34) respectif à une valeur ou un spectre de référence prédéfini, de préférence à plusieurs valeurs ou spectres de référence prédéfinis.

8. Procédé selon l'une quelconque des revendications 4 à 7, **caractérisé en ce que** différentes sous-classes d'un anticorps sont introduites en tant que réactifs (8a-e) dans au moins un des récipients (22).

9. Procédé selon la revendication 8, **caractérisé en ce que** les anticorps sont munis de marqueurs fluorescents ou de couleurs spécifiques et une analyse semi-quantitative est effectuée par l'évaluation des marqueurs fluorescents ou de couleurs.
